# EUROPÄISCHE PATENTSCHRIFT

(11) **EP 0 935 539 B1**
(45) Veröffentlichungstag und Bekanntmachung des Hinweises auf die Patenterteilung: **05.04.2000**
(21) Anmeldenummer: 97946732.1
(22) Anmeldetag: 20.10.1997
(51) Int. Cl.: B60M 1/24

(54) **SEILDREHKLEMME**
TURNING CLAMP FOR A CABLE
BORNE TOURNANTE POUR CABLES

(30) Priorität: 29.10.1996 DE 19644985
(43) Veröffentlichungstag der Anmeldung: 18.08.1999
(73) Patentinhaber: SIEMENS AKTIENGESELLSCHAFT, 80333 München (DE)
(72) Erfinder: UREMOVIC, Nikola, D-91052 Erlangen (DE)
(86) Internationale Anmeldenummer: DE9702417
(87) Internationale Veröffentlichungsnummer: WO9818647

(56) Entgegenhaltungen:
- DE-C- 4 116 506
- GB-A- 395 857
- US-A- 1 594 927

## Beschreibung

Die Erfindung betrifft eine Seildrehklemme.

Derartige Seildrehklemmen dienen z.B. dazu, ein Tragseil eines Kettenwerkes, ein Erdungsseil oder eine parallel zur Fahrleitung geführte Verstärkungsleitung durch Klemmung zu halten. Die bekannten Seildrehklemmen sind hierzu z.B. an einem elastischen Tunnelstützpunkt oder an einem konventionellen Kettenwerksausleger befestigt. Abhängig vom Einbauort und von dem zu klemmenden Seil oder der zu klemmenden Leitung muß die Seildrehklemme konstruktiv anders ausgebildet sein. Für jeden Anwendungsfall ist damit eine besondere Seildrehklemme erforderlich. Dies erfordert die Bevorratung einer Vielzahl von unterschiedlichen Seildrehklemmen.

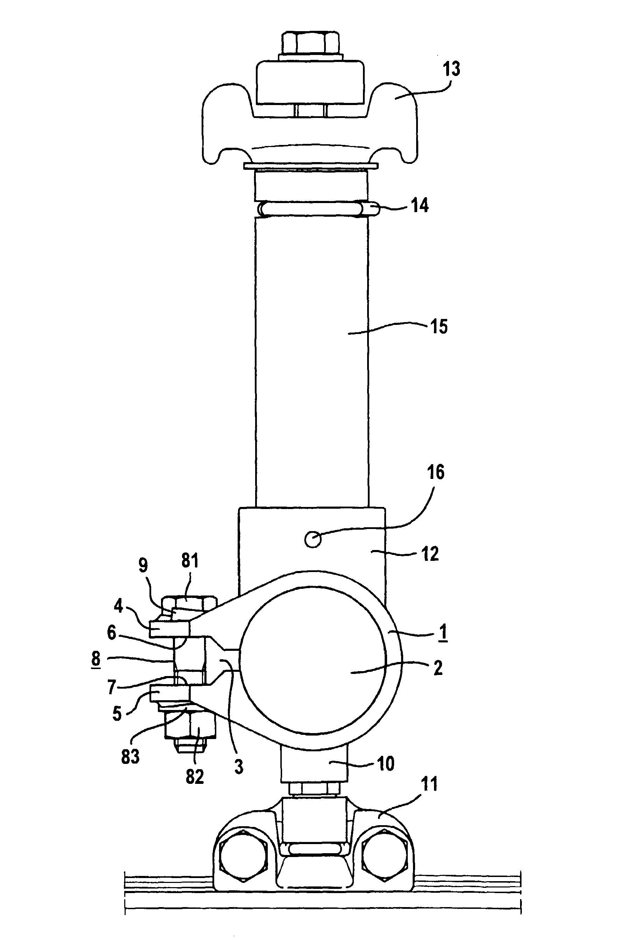

In der Siemens-Produktschrift "Einzelteile für Ausleger aus Aluminium für Oberleitungen im Nahverkehr" ist auf Seite 8 in Abbildung 12 ist eine Seildrehklemme dargestellt, die eine zweiteilige Rohrklemme umfaßt. Die zweiteileige Rohrklemme umschließt ein Rohr oder einen Stab eines Fahrleitungsstützpunktes unter Belassung eines Längsschlitzes nahezu vollständig. An beiden Seiten des Längsschlitzes ist jeweils eine Lasche angeformt, die jeweils eine Durchgangsbohrung zur Aufnahme eines Spannelementes aufweist. An der Unterseite der Rohrklemme ist ein unteres Halteelement zur lösbaren Aufnahme eines weiteren Oberleitungsteiles angeformt. An der Oberseite des Rohrklemme ist ein oberes Halteelement angeformt, in dem ein Klemmkörper für Seile drehbar und lösbar gehalten ist.

Weiterhin sind aus der US-PS 5 380 961 einteilige Rohrklemmen für Fahrleitungsstützpunkte bekannt.

Ferner ist aus der DE-OS 38 14 491 eine isolierte Tragseil-Dreh-Klemme zur Aufnahme von Tragseilen für Fahrleitungen bekannt. Die bekannte Seildrehklemme ist aus einem Tragseilklemmhalter und einer Klemmbacke aufgebaut. Der Tragseilklemmhalter besteht aus einem Isolatortisch mit Drehachse, einem Tragseilklemmkörper und mehreren zwischen beiden angeordneten Isolatoren. Der Isolatortisch ist damit gegenüber dem Tragseilklemmkörper beabstandet angeordnet. Der Abstand zwischen Isolatortisch und Tragseilklemmkörper wird damit von der Länge der benötigten Isolatoren bestimmt.

Aufgabe der vorliegenden Erfindung ist es deshalb, eine Seildrehklemme zu schaffen, die ohne konstruktive Änderung für alle bekannten Anwendungsfälle geeignet ist.

Die Aufgabe wird erfindungsgemäß durch die Merkmale im Anspruch 1 gelöst. Vorteilhafte Ausgestaltungen der Erfindung sind in den weiteren Ansprüchen beschrieben.

Die erfindungsgemäße Seildrehklemme umfaßt eine einteilige Rohrklemme, die ein Rohr oder einen Stab eines Fahrleitungsstützpunktes unter Belassung eines Längsschlitzes nahezu vollständig umschließt, wobei an beiden Seiten des Längsschlitzes jeweils eine Lasche angeformt ist, die jeweils eine Durchgangsbohrung zur Aufnahme eines Spannelementes aufweist. An der Unterseite der Rohrklemme ist wenigstens ein unteres Halteelement zur lösbaren Aufnahme eines weiteren Oberleitungsteiles, wie z.B. Fahrdrahtklemme oder Stützrohrhänger, angeformt. An der Oberseite der Rohrklemme ist wenigstens ein oberes Halteelement angeformt, in dem ein Verlängerungselement mit seinem unteren Ende verdrehfest gehalten ist. Am oberen Ende des Verlängerungselementes ist ein Klemmkörper für Seile, wie z.B. Tragseile oder Verstärkungsleitungen, drehbar und lösbar gehalten.

Bei der Seildrehklemme nach Anspruch 1 ist der Klemmkörper erfindungsgemäß über ein Verlängerungselement auf dem oberen Halteelement gehalten. Die Drehbarkeit des Klemmkörpers wird am oberen Ende des Verlängerungselementes ermöglicht. Das Verlängerungselement kann hierbei als Rohr (Anspruch 2) oder als Stab (Anspruch 3) ausgebildet sein. In Abhängigkeit vom Anwendungsfall kann der Klemmkörper auch als Isolierelement ausgebildet sein (Anspruch 4).

Die Seildrehklemme gemäß Anspruch 1 zeichnet sich durch einen kompakten Aufbau bei gleichzeitig geringem Gewicht aus. Sie ist vielseitig einsetzbar, ohne daß hierfür konstruktive Änderungen an der einteiligen Rohrklemme erforderlich sind. Die erfindungsgemäße Seildrehklemme ermöglicht durch die Längenauswahl beim Verbindungselement eine einfache Anpassung an die Systemhöhe des Kettenwerkes. Unter Systemhöhe des Kettenwerkes ist hierbei der Abstand zwischen Tragseil und Fahrdraht zu verstehen.

Obwohl die erfindungsgemäße Seildrehklemme vielseitig einsetzbar ist, weist sie einen konstruktiv einfachen Aufbau sowie ein geringes Gewicht auf und läßt sich damit leicht montieren.

Weitere Vorteile und Einzelheiten der Erfindung ergeben sich aus der nachfolgenden Beschreibung eines Ausführungsbeispiels anhand der Zeichnung, in der eine erfindungsgemäße Seildrehklemme in stirnseitiger Ansicht dargestellt ist.

In der Zeichnung ist mit 1 eine einteilige Rohrklemme bezeichnet, die ein Rohr oder einen Stab 2 eines Fahrleitungsstützpunktes unter Belassung eines Längsschlitzes 3 nahezu vollständig umschließt.

An beiden Seiten des Längsschlitzes 3 ist jeweils eine Lasche 4 bzw. 5 angeformt, die jeweils eine Durchgangsbohrung 6 bzw. 7 zur Aufnahme eines Spannelementes 8 aufweist.

Das Spannelement 8 umfaßt im vorliegenden Ausführungsbeispiel eine Spannschraube 81, auf die eine Spannmutter 82 aufschraubbar ist. Zwischen der unteren Lasche 5 und der Spannmutter 82 ist eine Beilagscheibe 83 angeordnet. Um die Spannschraube 81 beim Festziehen der Spannmutter 82 gegen Verdrehen zu sichern, weist die obere Lasche 4 eine seitlich zur Durchgangsbohrung 6 angeordnete Verdrehsicherung 9 auf.

An der Unterseite der Rohrklemme 1 ist ein unteres Halteelement 10 zur lösbaren Aufnahme eines weiteren Oberleitungsteiles, im vorliegenden Fall einer Fahrdrahtklemme 11 angeformt.

An der Oberseite der Rohrklemme 1 ist ein oberes Halteelement 12 angeformt, in der ein Klemmkörper 13 für Seile, z.B. Tragseile, Verstärkungsleitungen oder Erdungsseile, drehbar und lösbar gehalten ist.

Erfindungsgemäß ist der Klemmkörper 13 über ein Verlängerungselement 15 mit dem oberen Halteelement 12 verbunden. Das Verlängerungselement 15 ist im vorliegenden Ausführungsbeispiel als Rohr ausgebildet und an seinem oberen Ende drehbar mit dem Klemmkörper 13 verbunden. An seinem unteren Ende ist das Verlängerungselement 15 durch eine Spannhülse 16 verdrehfest im oberen Halteelement 12 gehalten.

Die Verbindung zwischen dem Klemmkörper 13 und dem oberen Halteelement 12 wird durch einen Splint 14 hergestellt, der einerseits in zwei gegenüberliegend am oberen Halteelement 12 angeordneten Schlitzen und andererseits in eine dazu korrespondierende Nut am Klemmkörper 13 eingreift. Dadurch ist die axiale Sicherung zuverlässig gewährleistet und die Drehbarkeit des Klemmkörpers 13 gegenüber dem oberen Halteelement 12 und damit gegenüber der einteiligen Rohrklemme 1 bleibt erhalten.

## Patentansprüche

1. Seildrehklemme, die folgende Merkmale umfaßt:
- eine einteilige Rohrklemme (1), die ein Rohr oder einen Stab (2) eines Fahrleitungsstützpunktes unter Belassung eines Längsschlitzes (3) nahezu vollständig umschließt, wobei
- an beiden Seiten des Längsschlitzes (3) jeweils eine Lasche (4, 5) angeformt ist, die jeweils eine Durchgangsbohrung (6, 7) zur Aufnahme eines Spannelementes (8) aufweist, und
- an der Unterseite der Rohrklemme (1) wenigstens ein unteres Halteelement (10) zur lösbaren Aufnahme eines weiteren Oberleitungsteiles (11) angeformt ist und
- an der Oberseite der Rohrklemme (1) wenigstens ein oberes Halteelement (12) angeformt ist, in dem ein Verlängerungselement (15) mit seinem unteren Ende verdrehfest gehalten ist, und
- am oberen Ende des Verlängerungselementes (15) ein Klemmkörper (13) für Seile drehbar und lösbar gehalten ist.

2. Seildrehklemme nach Anspruch 1, wobei das Verlängerungselement (15) als Rohr ausgebildet ist.

3. Seildrehklemme nach Anspruch 1, wobei das Verlängerungselement (15) als Stab ausgebildet ist.

4. Seildrehklemme nach Anspruch 1, wobei der Klemmkörper (13) als Isolierelement ausgebildet ist.

## Claims

1. Turning clamp for cables that embraces the following features:
- a one-part tubular clamp (1) which almost completely surrounds a tube or a rod (2) of a contact-line support point leaving a longitudinal slot (3),
wherein
- pre-formed on both sides of the longitudinal slot (3) there is a respective clip (4, 5) which has a respective through-bore (6, 7) for receiving a tensioning element (8), and
- pre-formed on the underside of the tubular clamp (1) there is at least one lower holding element (10) for receiving a further overhead line portion (11) in a releasable manner, and
- pre-formed on the upper side of the tubular clamp (1) there is at least one upper holding element (12) in which the lower end of an extension element (15) is held in a torsion-resisting manner, and
- a clamping body (13) for cables is held at the upper end of the extension element (15) in a rotatable and releasable manner.

2. Turning clamp for cables according to claim 1, wherein the extension element (15) is formed as a tube.

3. Turning clamp for cables according to claim 1, wherein the extension element (15) is formed as a rod.

4. Turning clamp for cables according to claim 1, wherein the clamping body (13) is formed as an insulating element.

## Revendications

1. Borne tournante pour câbles, qui comporte les caractéristiques suivantes :
- un collier (1) de serrage d'un seul tenant, qui entoure presque totalement un tube ou une barre (2) d'un point d'appui de ligne de contact, en laissant libre une fente (3) longitudinale,
- une patte (4, 5) respective étant formée de part et d'autre de la fente (3) longitudinale, chaque patte comportant un perçage (6, 7) traversant destiné à recevoir un élément (8) de serrage, et
- au moins un élément (10) de maintien inférieur étant formé sur le dessous du collier (1) de serrage pour recevoir de façon amovible un autre élément (11) de caténaire, et
- au moins un élément (12) de maintien supérieur étant formé sur le dessus du collier (1) de serrage, élément dans lequel un élément (15) prolongateur est maintenu sans possibilité de rotation par son extrémité inférieure, et
- un corps (13) de serrage pour câbles étant fixé à rotation et de façon amovible à l'extrémité supérieure de l'élément (15) prolongateur.

2. Borne tournante pour câbles suivant la revendication 1, dans laquelle l'élément (15) prolongateur est réalisé sous forme de tube

3. Borne tournante pour câbles suivant la revendication 1, dans laquelle l'élément (15) prolongateur est réalisé sous forme de barre.

4. Borne tournante pour câbles suivant la revendication 1, dans laquelle le corps (13) de serrage est conçu comme élément isolant.
